# EUROPEAN PATENT APPLICATION

(11) **EP 4 693 273 A1**
(43) Date of publication of application: **11.02.2026**
(21) Application number: 23940817.2
(22) Date of filing: 09.06.2023
(51) Int. Cl.: G09G 5/02, G09G 3/00, G06F 1/16

(54) **DISPLAY DEVICE AND COLOR DIFFERENCE CORRECTION METHOD THEREOF**

(71) Applicant: LG Electronics Inc., Yeongdeungpo-gu Seoul 07336 (KR)
(72) Inventor: PARK, Sung Won, Seoul 06772 (KR)
(74) Representative: Schott, Jakob Valentin
(86) International application number: PCT/KR2023/007968
(87) International publication number: WO 2024/253231

(57) **Abstract**

The present disclosure relates to: a display device capable of correcting a color difference between a light-shielding area and a transparent area on a transparent display; and a color difference correction method thereof, the display device comprising: a transparent panel; a light-shielding unit for forming a light-shielding area on the transparent panel; and a processor for correcting image color of the light-shielding area, wherein the processor can check whether both a light-transmitting area and the light-shielding area are present on the transparent panel, acquire an external illuminance value if both the light-transmitting area and the light-shielding area are present, and correct the color of an image corresponding to the light-shielding area on the basis of the acquired external illuminance value.

## Description

### [Technical Field]

The present disclosure relates to a display device capable of compensating for a color difference between a light-shielding area and a transparent area in a transparent display, and a method for compensating for a color difference thereof.

### [Background Art]

In general, a display device is a device that has the function of receiving, processing, and displaying images that can be viewed by a user. A display device receives a broadcast signal selected by a user from among broadcast signals transmitted from a broadcasting station, separates an image signal from the received signal, and then displays the separated image signal on a display.

In recent years, due to the development of broadcasting technology and network technology, the functions of display devices have become considerably more diverse, and the performance of the devices has also improved accordingly. In other words, display devices have evolved to provide users with not only simply broadcasted content, but also various other content.

For example, the display device can provide not only programs received from broadcasting stations, but also game play, music appreciation, Internet shopping, and customized information using various applications. In order to perform these expanded functions, the display device is basically connected to other devices or networks using various communication protocols, and can provide a ubiquitous computing environment to the user. In other words, the display device has evolved into a smart device that enables connectivity to a network and ubiquitous computing.

Meanwhile, the display device provides a transparent display through which the screen is visible by applying a transparent panel, thereby providing a visual augmented reality (AR) atmosphere to the user.

However, a display device to which a transparent panel is applied can perform a light-shielding mode and a transparent mode by using a light-shielding film that shields light from the rear surface of the transparent panel, but, when a light-shielding area and a transparent area exist simultaneously in the transparent panel, there is a problem that the image quality deteriorates due to a color difference between the light-shielding area and the transparent area caused by external lighting.

Therefore, in the future, it is necessary to develop a display device that can improve image quality by compensating for the color difference that appears between the light-shielding area and the transparent area of a transparent panel.

### [Disclosure]

### [Technical Problem]

An object of the present disclosure is to solve the above-mentioned problems and other problems.

An object of the present disclosure is to provide a display device which can improve image quality by correcting color differences that appear between a light-shielding area and a light-transmitting area of a transparent panel based on an external illuminance value when both a light-transmitting area and a light-shielding area exist in a light-transmitting panel, and a method for correcting color differences thereof.

### [Technical Solution]

According to an embodiment of the present disclosure, a display device includes a transparent panel; a light-shielding part forming a light-shielding area on the transparent panel; and a processor correcting an image color of the light-shielding area, in which the processor may check whether both a light-transmitting area and a light-shielding area exist on the transparent panel, obtain an external illuminance value if both the light-transmitting area and the light-shielding area exist, and corrects an image color corresponding to the light-shielding area based on the obtained external illuminance value.

According to an embodiment of the present disclosure, a method for correcting color difference of a display device including a light-shielding film for shielding light from a transparent panel may include checking whether both a light-transmitting area and a light-shielding area exist in the transparent panel; obtaining an external illuminance value if both a light-transmitting area and a light-shielding area exist in the transparent panel; and correcting the image color corresponding to the light-shielding area based on the obtained external illuminance value.

### [Advantageous Effect]

According to one embodiment of the present disclosure, a display device and a method for correcting color differences thereof can improve image quality and provide a stable image to a user by correcting a color difference appearing between a light-shielding area and a light-transmitting area of a transparent panel based on an external illuminance value when both a light-transmitting area and a light-shielding area exist in a light-transmitting panel.

### [Description of Drawings]

FIG. 1 is a block diagram illustrating a display device having a transparent panel according to one embodiment of the present disclosure.
FIGS. 2(a) to 2(c) are views for explaining the image color difference of a transparent panel including a constant light-shielding area.
FIGS. 3(a) to 3(c) are views for explaining the image color difference of a transparent panel including a constant light-shielding area and a variable light-shielding area.
FIGS. 4(a) to 4(c) are views for explaining an image of a transparent panel including the entire light-shielding area.
FIGS. 5(a) to 5(c) are views for explaining a transparent panel in which the image color difference between the light-shielding area and the light-transmitting area is corrected.
FIGS. 6(a) and 6(b) are views for explaining the operation of the light-shielding film.
FIGS. 7(a) to 7(c) are views for explaining the movement of a light-shielding film of a light-shielding part that is arranged to overlap a transparent panel.
FIGS. 8(a) to 8(c) are views for explaining the movement of a light-shielding film of a light-shielding part that is arranged so as not to overlap a transparent panel.
FIG. 9 is a view for explaining a process of correcting the color difference of an image of a transparent panel overlapping a light-shielding part.
FIG. 10 is a view for explaining a process of correcting the color difference of an image of a transparent panel that does not overlap a light-shielding part.
FIG. 11 is a flowchart for explaining a method for correcting color difference of a display device according to an embodiment of the present disclosure.
FIG. 12 is a block diagram illustrating a configuration of a display device according to an embodiment of the present disclosure.

### [Best Mode]

Hereinafter, embodiments disclosed in the present specification will be described in detail with reference to the attached drawings, and regardless of the drawing symbols, identical or similar components will be given the same reference numerals and redundant descriptions thereof will be omitted. The suffixes "module" and "part" for components used in the description below are assigned or mixed in consideration of easiness in writing the specification and do not have distinctive meanings or roles by themselves. In addition, when describing embodiments disclosed in this specification and if it is determined that a specific description of a related known technology may obscure the gist of the embodiments disclosed in this specification, the detailed description thereof will be omitted. In addition, the attached drawings are only intended to facilitate easy understanding of the embodiments disclosed in this specification, and the technical ideas disclosed in this specification are not limited by the attached drawings, and should be understood to include all modifications, equivalents, and substitutes included in the spirit and technical scope of the present disclosure.

Terms including ordinal numbers, such as first, second, or the like, may be used to describe various components, but the components are not limited by the terms. The terms are used only to distinguish one component from another..

When it is said that a component is "connected" or "accessed" to another component, it should be understood that it may be directly connected or accessed to that other component, but that there may be other components in between. On the other hand, when it is said that a component is "directly connected" or "directly accessed" to another component, it should be understood that there are no other components in between.

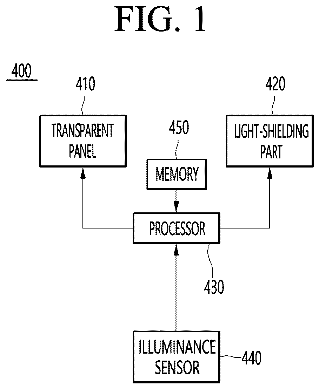

FIG. 1 is a block diagram illustrating a display device having a transparent panel according to one embodiment of the present disclosure.

As illustrated in FIG. 1, the display device 400 of the present disclosure may include a transparent panel 410, a light-shielding part 422 forming a light-shielding area on the light-transmitting panel 410, and a processor 430 correcting an image color of the light-shielding area.

In addition, the display device 400 of the present disclosure may further include an illuminance sensor 440 that senses external illuminance and a memory 450 that stores an illuminance-specific image color information table.

For example, the light-shielding part 420 may include a light-shielding film that shields light from the rear surface of the light-transmitting panel 410, a driving part that moves the light-shielding film to a target position, and a light-shielding box that covers the light-shielding film and the driving part.

Here, the light-shielding film can move along the rear surface of the light-transmitting panel 410 to form a light-shielding area on the light-transmitting panel 410.

The light-shielding part 420 may include a mechanical light-shielding part and an electronic light-shielding part.

For example, the mechanical light-shielding part may include a light-shielding film that shields light from the rear surface of the light-transmitting panel 410, a driving part that moves the light-shielding film to a target position, and a sensor that senses the movement distance of the light-shielding film.

The light-shielding film may be made of a roll-up material, but this is only an example and is not limited thereto.

In addition, the light-shielding film has a plurality of magnets arranged at regular intervals on the front surface facing the rear surface of the light-transmitting panel 410, and the sensors include at least one first sensor that senses a first polarity of the magnets and at least one second sensor that senses a second polarity of the magnets, and the first sensor and the second sensor can be arranged on the rear surface of the light-transmitting panel 410.

Here, a plurality of magnets are arranged in a matrix form on the light-shielding film, and the plurality of magnets arranged in the column direction or the transverse direction can be arranged by mixing magnets having a first polarity and magnets having a second polarity.

Additionally, the first sensor may be arranged to correspond to a first row among the plurality of magnets when the direction of movement of the light-shielding film is perpendicular to the transparent panel, and the second sensor may be arranged to correspond to a second row adjacent to the first row.

For example, the plurality of magnets arranged in the first row may be arranged such that magnets having the first polarity and magnets having the second polarity are mixed in a first arrangement order, and the plurality of magnets arranged in the second row may be arranged such that magnets having the first polarity and magnets having the second polarity are mixed in a second arrangement order that is different from the first arrangement order of the first row.

Additionally, the first sensor may be arranged to correspond to a first row among the plurality of magnets when the direction of movement of the light-shielding film is horizontal to the transparent panel, and the second sensor may be arranged to correspond to a second row adjacent to the first row.

In addition, the driving part may include a step motor or a DC motor, but this is only an example and is not limited thereto.

As another example, the electronic light-shielding part may include a light-shielding plate having a plurality of light-shielding pixels arranged in a matrix form, and a driving part that drives the light-shielding pixels of the light-shielding plate to move a light-shielding area of the light-shielding plate to a movement target position.

Here, the light-shielding plate may include a transparent upper plate on which the first electrode is arranged, a transparent lower plate on which the second electrode is arranged and has a predetermined distance from the transparent upper plate, and a light-shielding material filled in a light-shielding pixel area between the transparent upper plate and the transparent lower plate.

At this time, the light-shielding plate can transmit or block light by changing the arrangement of light-shielding materials in each light-shielding pixel area according to the voltage applied to the first electrode and the second electrode.

In addition, the light-shielding material may be composed of at least one of a mixed liquid crystal in which a plurality of liquid crystals having different arrangement characteristics are mixed, and a mixed pigment in which two or three pigments having different light absorption wavelength bands are mixed to block the wavelength band of visible light.

For example, the mixed liquid crystal may be a mixture of polymer dispersed nematic liquid crystals (PDNLC), negative nematic liquid crystals, and cholesteric liquid crystals in a certain ratio.

Additionally, the mixed pigment may be a pigment including an Azodye, a Quinacridone, and a perylene substance, but this is only an example and is not limited thereto.

Next, the processor 430 checks whether both a light-transmitting area and a light-shielding area exist in the light-transmitting panel 410, and if both a light-transmitting area and a light-shielding area exist, obtains an external illuminance value, and can correct the image color corresponding to the light-shielding area based on the obtained external illuminance value.

In one embodiment, when checking whether both a light-transmitting area and a light-shielding area exist in the light-transmitting panel 410, the processor 430 may check the current screen mode of the light-transmitting panel 410, and check whether both a light-transmitting area and a light-shielding area exist in the light-transmitting panel 410 based on the current screen mode of the light-transmitting panel 410.

Here, the processor 430 can check that both a light-transmitting area and a light-shielding area exist in the light-transmitting panel 410 if the current screen mode of the light-transmitting panel 410 is a transparent screen mode or a partially light-shielding screen mode, and can check that only a light-shielding area exists in the light-transmitting panel 410 if the current screen mode of the light-transmitting panel 410 is a full light-shielding screen mode.

In addition, the processor 430 can control the driving part so that the light-shielding film of the light-shielding part 420 moves to a target position that shields light from a partial area of the light-transmitting panel 410 when the light-transmitting panel 410 is in a partial light-shielding screen mode, and can control the driving part so that the light-shielding film of the light-shielding part 420 moves to a target position that shields light from the entire area of the light-transmitting panel 410 when the light-transmitting panel 410 is in a full light-shielding screen mode.

In addition, if the current screen mode of the light-transmitting panel 410 is a transparent screen mode, the processor 430 can recognize an area overlapping with the light-shielding box of the light-shielding part 420 among the entire area of the transparent panel as a light-shielding area, and recognize the remaining area as a light-transmitting area.

Here, the memory 450 can store pixel position information located within the overlapping area of the transparent panel overlapping the light-shielding box.

At this time, the processor 430 can recognize the light-shielding area based on pixel position information within the overlapping area stored in the memory 450 if the light-transmitting panel 410 is in transparent screen mode.

In addition, the processor 430 can check that both a light-transmitting area and a light-shielding area exist in the light-transmitting panel 410 if the current screen mode of the light-transmitting panel 410 is a partial light-shielding screen mode, check that only a light-transmitting area exists in the light-transmitting panel 410 if the current screen mode of the light-transmitting panel 410 is a transparent screen mode, and check that only a light-shielding area exists in the light-transmitting panel 410 if the current screen mode of the light-transmitting panel 410 is a full light-shielding screen mode.

Here, the processor 430 can control the driving part so that the light-shielding film of the light-shielding part 420 moves to a target position that shields light from a partial area of the light-transmitting panel 410 when the light-transmitting panel 410 is in a partial light-shielding screen mode, and can control the driving part so that the light-shielding film of the light-shielding part 420 moves to a target position that shields light from the entire area of the light-transmitting panel 410 when the light-transmitting panel 410 is in a full light-shielding screen mode.

In addition, the processor 430 can check that both a light-transmitting area and a light-shielding area exist in the light-transmitting panel 410 while the light-shielding film of the light-shielding part 420 moves to a target position for shielding light from a partial area of the light-transmitting panel 410 when the screen mode of the light-transmitting panel 410 is a transition mode from a transparent screen mode to a partial light-shielding screen mode, and can check that both a light-transmitting area and a light-shielding area exist in the light-transmitting panel 410 while the light-shielding film of the light-shielding part 420 moves to a target position for shielding light from the entire area of the light-transmitting panel 410 when the screen mode of the light-transmitting panel 410 is a transition mode from a transparent screen mode to a full light-shielding screen mode.

Here, the processor 430 can check that both a light-transmitting area and a light-shielding area exist in the light-transmitting panel 410 while the light-shielding film of the light-shielding part 420 moves to a target position for transmitting light to the entire area of the light-transmitting panel 410 if the screen mode of the light-transmitting panel 410 is a transition mode from a full light-shielding screen mode to a transparent screen mode, and can check that both a light-transmitting area and a light-shielding area exist in the light-transmitting panel 410 while the light-shielding film of the light-shielding part 420 moves to a target position for light-shielding a partial area of the light-transmitting panel 410 if the screen mode of the light-transmitting panel 410 is a transition mode from a full light-shielding screen mode to a partial light-shielding screen mode.

In another embodiment, when checking whether both a light-transmitting area and a light-shielding area exist in the light-transmitting panel 410, the processor 430 can check the position of the light-shielding film of the light-shielding part 420, and check whether both a light-transmitting area and a light-shielding area exist in the light-transmitting panel 410 based on the light-shielding film position.

Here, when the processor 430 checks the position of the light-shielding film of the light-shielding part 420, if the light-shielding film of the light-shielding part 420 moves to the target position, the movement distance of the light-shielding film can be calculated, and the position of the light-shielding film can be checked based on the movement distance of the light-shielding film.

For example, the processor 430 can check that both a light-transmitting area and a light-shielding area exist in the light-transmitting panel 410 if the movement distance of the light-shielding film is 0 or less than the maximum value, and can check that only a light-shielding area exists in the light-transmitting panel 410 if the movement distance of the light-shielding film is equal to or greater than the maximum value.

In addition, the processor 430 can recognize an area overlapping with the light-shielding box of the light-shielding part 420 among the entire area of the light-transmitting panel 410 as a light-shielding area when the movement distance of the light-shielding film is 0, and recognize the remaining area as a light-transmitting area.

Here, the memory 450 can store pixel position information located within the overlapping area of the light-transmitting panel 410 overlapping the light-shielding box.

At this time, the processor 430 can recognize the light-shielding area based on pixel position information within the overlapping area stored in the memory 450 if the movement distance of the light-shielding area is 0.

In addition, the processor 430 can check that only a light-transmitting area exists in the light-transmitting panel 410 if the movement distance of the light-shading film is 0, check that both a light-transmitting area and a light-shielding area exist in the light-transmitting panel 410 if the movement distance of the light-shading film is less than a maximum value, and check that only a light-shielding area exists in the light-transmitting panel 410 if the movement distance of the light-shielding film is equal to or greater than a maximum value.

In addition, the processor 430 can check that both a light-transmitting area and a light-shielding area exist in the light-transmitting panel 410 while the light-shielding film moves to a target position that shields light from a partial area of the light-transmitting panel 410 if the movement distance of the light-shielding film is variable from 0 to less than a maximum value, and check that both a light-transmitting area and a light-shielding area exist in the light-transmitting panel 410 while the light-shielding film moves to a target position that shields light from the entire area of the light-transmitting panel 410 if the movement distance of the light-shielding film is variable from 0 to equal to or greater than a maximum value.

In addition, the processor 430 can check that both a light-transmitting area and a light-shielding area exist in the light-transmitting panel 410 while the light-shielding film moves to a target position that transmits light to the entire area of the light-transmitting panel 410 if the movement distance of the light-shielding film is variable from a maximum value to 0, and check that both a light-transmitting area and a light-shielding area exist in the light-transmitting panel 410 while the light-shielding film moves to a target position that shields light from a partial area of the light-transmitting panel 410 if the movement distance of the light-shielding film is variable from a maximum value to less than a maximum value.

In another embodiment, when checking the position of the light-shielding film of the light-shielding part 420, the processor 430 calculates the movement time and movement position of the light-shielding film based on the sensing signal obtained from the position sensor disposed on the light-transmitting panel 410 when the light-shielding film of the light-shielding part 420 moves to the target position, and the light-shielding film position can also be checked based on the calculated movement time and movement position of the light-shielding film.

Next, when the processor 430 obtains an external illuminance value, if determining that both a light-transmitting area and a light-shielding area exist in the light-transmitting panel 410, can obtain the current external illuminance value from the illuminance sensor 440.

Next, when correcting the image color corresponding to a light-shielding area, the processor 430 can extract image color information corresponding to an external illuminance value obtained from an illuminance-specific image color information table stored in the memory 450, and correct the R, G, and B colors of the image corresponding to the light-shielding area based on the extracted image color information.

For example, the illuminance-specific image color information table may include an illuminance-specific color gamut lookup table.

In addition, the processor 430 can calculate the time and position at which the light-shielding film of the light-shielding part 420 moves when correcting the image color corresponding to the light-shielding area, determine the image correction area corresponding to the light-shielding area based on the calculated time and position, and correct the R, G, and B colors of the image corresponding to the image correction area based on the extracted image color information.

Here, the processor 430 can correct the R, G, and B values of pixels corresponding to the horizontal coordinates of the vertical line in the image correction area of the light-transmitting panel 410 according to the movement position of the light-shielding film.

At this time, the processor 430 can calculate the movement time and movement position of the light-shielding film based on the sensing signal obtained from the position sensor placed on the light-transmitting panel 410.

In this way, the present disclosure can provide a stable image to a user by improving image quality by correcting the color difference that appears between the light-shielding area and the light-transmitting area of a transparent panel based on an external illuminance value when both a light-transmitting area and a light-shielding area exist in a light-transmitting panel.

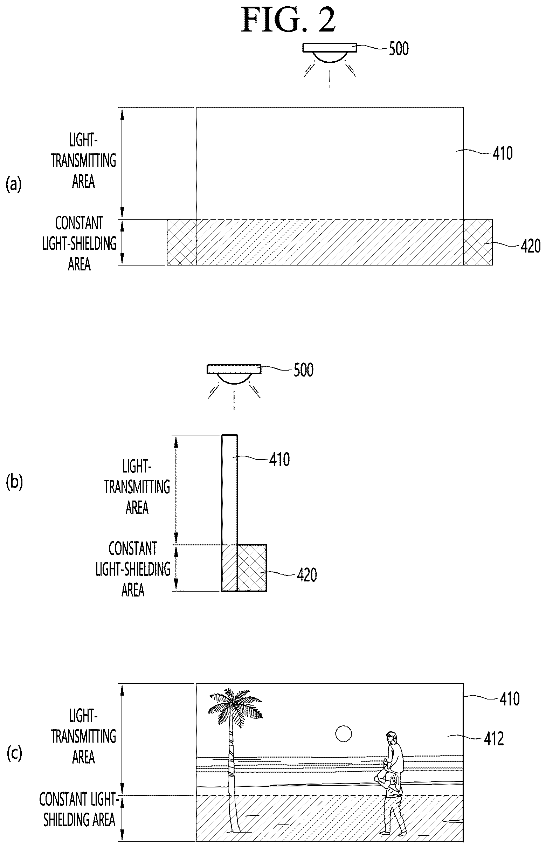

FIGS. 2(a) to 2(c) are views for explaining the image color difference of a transparent panel including a constant light-shielding area.

As illustrated in FIGS. 2(a) and 2(b), the light-shielding part 420 may include a light-shielding film that shields light from the rear surface of the light-transmitting panel 410, a driving part that moves the light-shielding film to a target position, and a light-shielding box that covers the light-shielding film and the driving part.

Here, the light-shielding box of the light-shielding part 420 is fixedly positioned to overlap a part of the light-transmitting panel 410 and can form a constant light-shielding area on the light-transmitting panel 410.

For example, the light-shielding box of the light-shielding part 420 can be fixedly positioned to overlap the lower end part of the light-transmitting panel 410 and form a constant light-shielding area at the lower end part of the light-transmitting panel 410.

In this way, when the light-shielding part 420 is placed overlapping the light-transmitting panel 410, the light-transmitting panel 410 has a light-transmitting area and a constant light-shielding area even in a transparent screen mode without a light-shielding film due to external lighting 500.

Here, as illustrated in FIG. 2(c), the image 412 displayed on the light-transmitting panel 410 may have a color difference between the image of the light-transmitting area and the image of the constant light-shielding area, resulting in a deterioration in image quality.

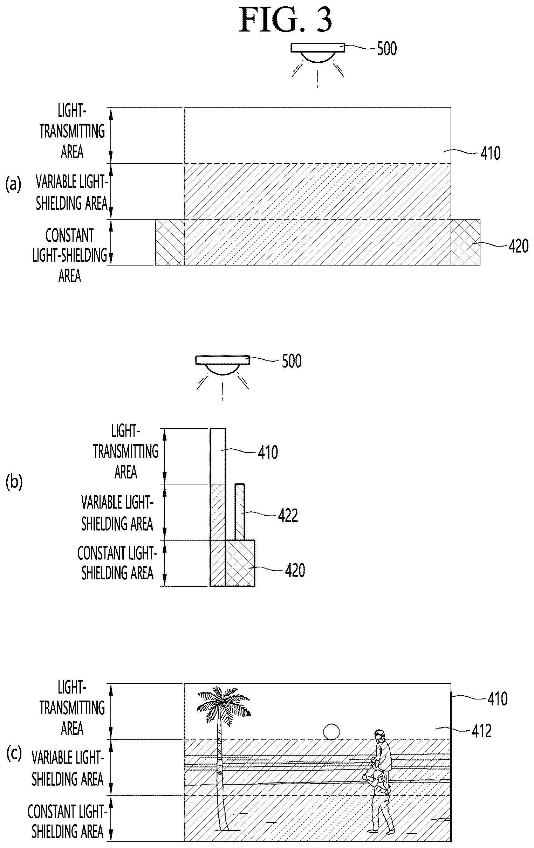

FIGS. 3(a) to 3(c) are drawings for explaining the image color difference of a transparent panel including a constant light-shielding area and a variable light-shielding area.

As illustrated in FIGS. 3(a) to 3(c), when the light-shielding part 420 is arranged to overlap a partial area of the light-transmitting panel 410, in a partial light-shielding screen mode in which a light-shielding film 422 exists in a partial area of the light-transmitting panel 410, a constant light-shielding area due to the light-shielding box overlap of the light-shielding part 420 by external lighting 500, a variable light-shielding area due to the movement of the light-shielding film 422, and a light-transmitting area in which the light-shielding film 422 does not overlap exist.

Here, as illustrated in FIG. 3(c), the image 412 displayed on the light-transmitting panel 410 may have a color difference between the image of the light-transmitting area and the image of the light-shielding area including the constant light-shielding area and the variable light-shielding area, which may result in a deterioration in image quality.

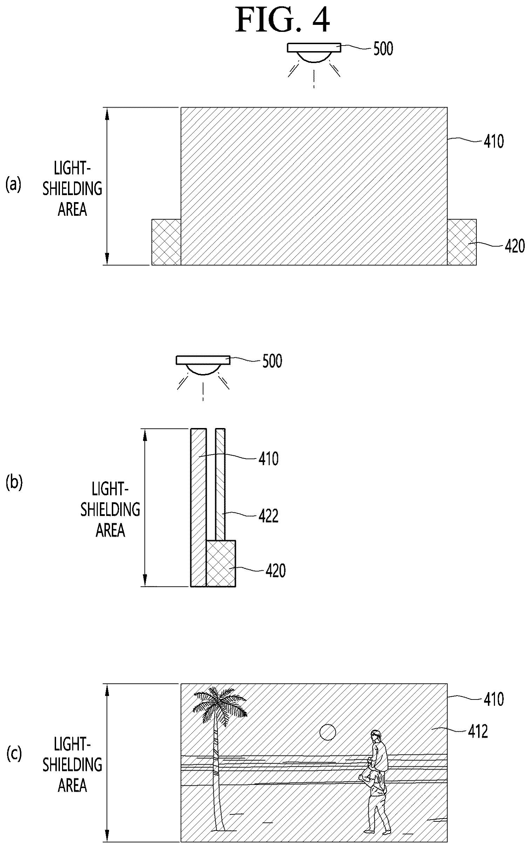

FIGS. 4(a) to 4(c) are views for explaining an image of a transparent panel including the entire light-shielding area.

As illustrated in FIGS. 4(a) to 4(c), when the light-shielding part 420 is arranged to overlap the entire area of the light-transmitting panel 410, in the entire light-shielding screen mode in which the light-shielding film 422 exists over the entire area of the light-transmitting panel 410, the entire light-shielding area exists due to movement of the light-shielding film 422.

Here, as illustrated in FIG. 4(c), the image 412 displayed on the light-transmitting panel 410 does not have an image color difference because only a light-shielding area exists on the light-transmitting panel 410.

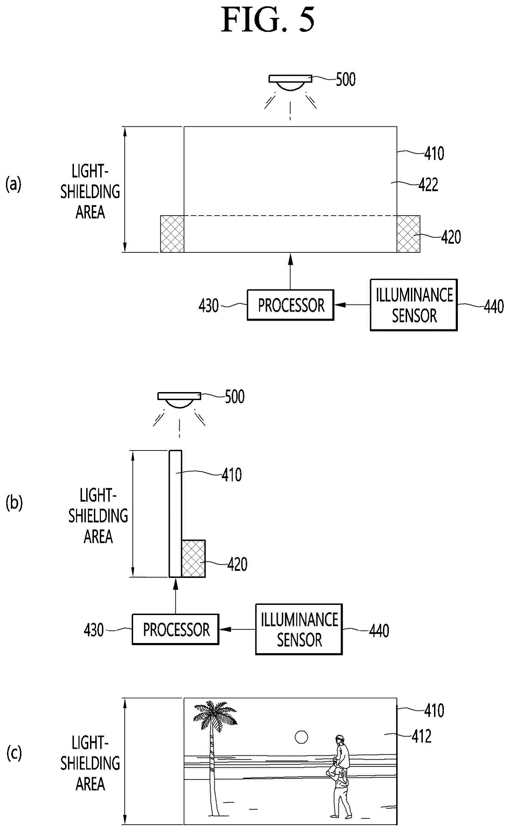

FIGS. 5(a) to 5(c) are views for explaining a transparent panel in which the image color difference between the light-shielding area and the light-transmitting area is corrected.

As illustrated in FIGS. 5(a) to 5(c), when a light-shielding part 420 is arranged to overlap a partial area of a transparent panel 410, the processor 430 of the present disclosure can sense an external illuminance value through an illuminance sensor 440 if the light-transmitting panel 410 is in transparent screen mode, and correct the image color corresponding to a constant light-shielding area based on the external illuminance value.

In addition, the processor 430 of the present disclosure can control a driving part to move a light-shielding film to a target position that shields light from a partial area of the light-transmitting panel 410 when the light-transmitting panel 410 is in a partial light-shielding screen mode, thereby forming a variable light-shielding area on the light-transmitting panel 410, sense an external illuminance value through an illuminance sensor 440, and correct the image color corresponding to the constant light-shielding area and the variable light-shielding area based on the external illuminance value.

Accordingly, as illustrated in FIG. 5(c), the image 412 displayed on the light-transmitting panel 410 can provide a stable image to the user by improving the image quality by correcting the color difference that occurs between the image of the light-transmitting area and the image of the light-shielding area including the constant light-shielding area and the variable light-shielding area.

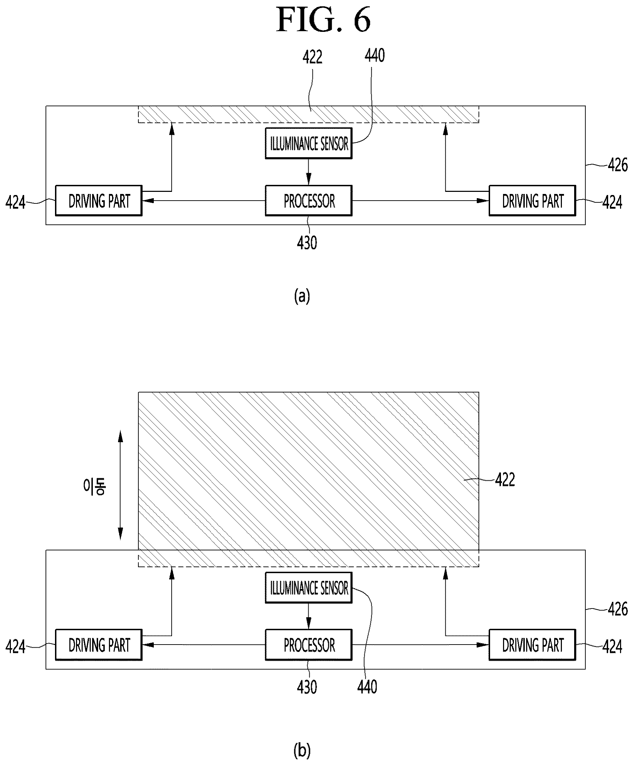

FIGS. 6(a) and 6(b) are views for explaining the operation of the light-shielding film.

As illustrated in FIGS. 6(a) and 6(b), the light-shielding part of the present disclosure may include a light-shielding film 422 that shields light from the rear surface of a transparent panel, a driving part 424 that moves the light-shielding film 422 to a target position, a processor 430 that controls the driving part 424, and a light-shielding box 426 that covers the light-shielding film 422 and the driving part 424.

Here, the light-shielding film 422 can move along the rear surface of the transparent panel to form a light-shielding area on the transparent panel.

The mechanical light-shielding film 422 may be made of a roll-up material, but this is only an example and is not limited thereto.

In addition, the light-shielding film 422 has a plurality of magnets arranged at regular intervals on the front surface facing the rear surface of the transparent panel, and the sensors include at least one first sensor that senses a first polarity of the magnets and at least one second sensor that senses a second polarity of the magnets, and the first sensor and the second sensor can be arranged on the rear surface of the transparent panel.

Here, a plurality of magnets are arranged in a matrix form on the light-shielding film, and the plurality of magnets arranged in the column direction or the transverse direction can be arranged by mixing magnets having a first polarity and magnets having a second polarity.

Additionally, the first sensor may be arranged to correspond to a first column among the plurality of magnets when the direction of movement of the light-shielding film is perpendicular to the transparent panel, and the second sensor may be arranged to correspond to a second column adjacent to the first column.

In addition, the driving part 424 may include a step motor or a DC motor, but this is only one embodiment and is not limited thereto.

As another example, the electronic light-shielding film 422 may include a light-shielding plate in which a plurality of light-shielding pixels are arranged in a matrix form.

Here, the light-shielding plate may include a transparent upper plate on which the first electrode is arranged, a transparent lower plate on which the second electrode is arranged and has a predetermined distance from the transparent upper plate, and a light-shielding material filled in a light-shielding pixel area between the transparent upper plate and the transparent lower plate.

At this time, the light-shielding plate can transmit or block light by changing the arrangement of light-shielding materials in each light-shielding pixel area according to the voltage applied to the first electrode and the second electrode.

In addition, the light-shielding material may be composed of at least one of a mixed liquid crystal in which a plurality of liquid crystals having different arrangement characteristics are mixed, and a mixed pigment in which two or three pigments having different light absorption wavelength bands are mixed to block the wavelength band of visible light.

Next, the processor 430 can control the driving part 424 to move the light-shielding film 422 to a target position for shielding light from a partial area of the transparent panel when the transparent panel is in a partial light-shielding screen mode, and control the driving part 424 to move the light-shielding film 422 to a target position for shielding light from the entire part of the transparent panel when the transparent panel is in a full light-shielding screen mode.

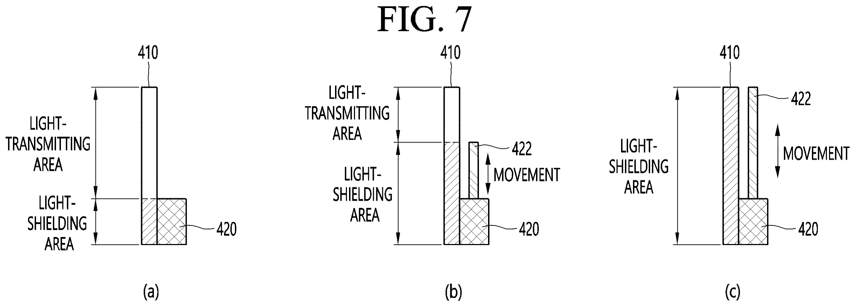

FIGS. 7(a) to 7(c) are views for explaining the movement of a light-shielding film of a light-shielding part that is arranged to overlap a transparent panel.

As illustrated in FIG. 7(a), the present disclosure can recognize an area overlapping with a light-shielding box of a light-shielding part 420 among the entire area of the light-transmitting panel 410 as a light-shielding area when the current screen mode of the light-transmitting panel 410 is a transparent screen mode, and recognize the remaining area as a light-transmitting area.

Here, the present disclosure can store pixel position information located within an overlapping area of a transparent panel 410 overlapping with a light-shielding box of a light-shielding part 422 in a memory.

At this time, the present disclosure can recognize the light-shielding area based on pixel position information within the overlapping area stored in the memory when the light-transmitting panel 410 is in transparent screen mode.

As illustrated in FIG. 7(b), the present disclosure can control the light-shielding film 422 of the light-shielding part 422 to move to a target position that shields light from a partial area of the light-transmitting panel 410 when the light-transmitting panel 410 is in a partial light-shielding screen mode.

In addition, as illustrated in FIG. 7(c), the present disclosure can control the light-shielding film 422 of the light-shielding part 422 to move to a target position that shields the entire area of the light-transmitting panel 410 when the light-transmitting panel 410 is in full light-shielding screen mode.

In this way, the present disclosure can check that both a light-transmitting area and a light-shielding area exist in the light-transmitting panel 410 if the current screen mode of the light-transmitting panel 410 is a transparent screen mode or a partially light-shielding screen mode and check that only a light-shielding area exists in the light-transmitting panel 410 if the current screen mode of the light-transmitting panel 410 is a full light-shielding screen mode.

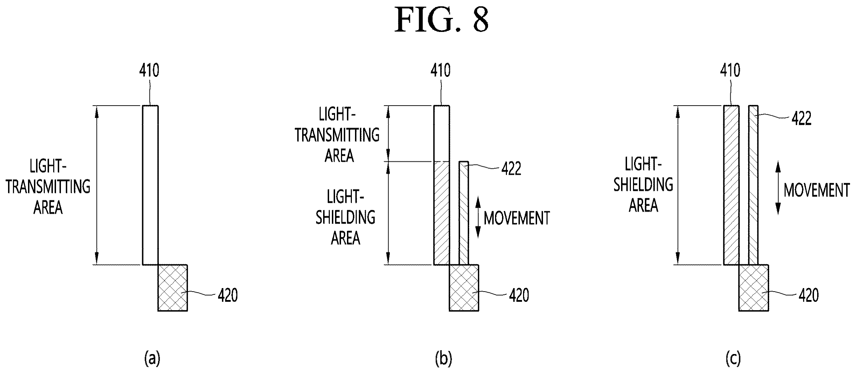

FIGS. 8(a) to 8(c) are views for explaining the movement of a light-shielding film of a light-shielding part that is arranged so as not to overlap a transparent panel.

As illustrated in FIG. 8(a), the present disclosure can recognize the entire area of the light-transmitting panel 410 as a light-transmitting area when the light-shielding box of the light-shielding part 422 is positioned so as not to overlap the light-transmitting panel 410 and the current screen mode of the light-transmitting panel 410 is a transparent screen mode.

In other words, the present disclosure can check that only a light-transmitting area exists on the light-transmitting panel 410 when the current screen mode of the light-transmitting panel 410 is a transparent screen mode.

In addition, as illustrated in FIG. 8(b), the present disclosure can control the light-shielding film 422 of the light-shielding part 422 to move to a target position that shields light from a partial area of the light-transmitting panel 410 when the current screen mode of the light-transmitting panel 410 is a partial light-shielding screen mode.

Here, the present disclosure can check that both a light-transmitting area and a light-shielding area exist in the light-transmitting panel 410 when the current screen mode of the light-transmitting panel 410 is a partial light-shielding screen mode.

In addition, as illustrated in FIG. 8(c), the present disclosure can control the light-shielding film 422 of the light-shielding part 422 to move to a target position that shields the entire area of the light-transmitting panel 410 when the light-transmitting panel 410 is in full light-shielding screen mode.

Here, the present disclosure can check that only a light-shielding area exists in the light-transmitting panel 410 when the current screen mode of the light-transmitting panel 410 is a full light-shielding screen mode.

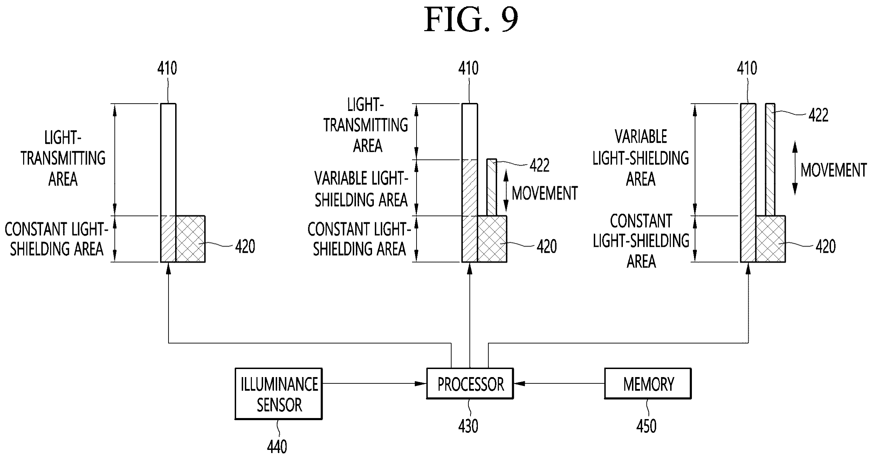

FIG. 9 is a view for explaining a process of correcting the color difference of an image of a transparent panel overlapping a light-shielding part.

As illustrated in FIG. 9, in the present disclosure, when a light-shielding part 420 overlaps with a transparent panel 410, a light-shielding box of the light-shielding part 420 is fixedly arranged to overlap with a part of the light-transmitting panel 410, and can form a constant light-shielding area on the light-transmitting panel 410.

In addition, the light-shielding film 422 of the light-shielding part 420 can move along the rear surface of the light-transmitting panel 410 to form a variable light-shielding area on the light-transmitting panel 410.

The processor 430 of the present disclosure can check the current screen mode of the light-transmitting panel 410, and if the current screen mode of the light-transmitting panel 410 is a transparent screen mode, recognize an area overlapping with the light-shielding box of the light-shielding part 420 among the entire area of the light-transmitting panel 410 as a light-shielding area, and recognize the remaining area as a light-transmitting area.

Here, the processor 430 of the present disclosure can sense an external illuminance value through an illuminance sensor 440 when the light-transmitting panel 410 is in transparent screen mode, and correct the image color corresponding to a constant light-shielding area based on the external illuminance value.

In other words, the processor 430 of the present disclosure can extract image color information corresponding to an external illuminance value obtained from an illuminance-specific image color information table stored in a memory 450, and correct the R, G, and B colors of an image corresponding to a constant light-shielding area based on the extracted image color information.

For example, the illuminance-specific image color information table may include an illuminance-specific color gamut lookup table.

In addition, the processor 430 of the present disclosure can check the current screen mode of the light-transmitting panel 410, and if the current screen mode of the light-transmitting panel 410 is a partial light-shielding screen mode, control the driving part so that the light-shielding film 422 of the light-shielding part 420 moves to a target position that shields light from a partial area of the light-transmitting panel 410.

Here, the processor 430 of the present disclosure can recognize that, if the current screen mode of the light-transmitting panel 410 is a partial light-shielding screen mode, there exists both a light-shielding area including a constant light-shielding area by the light-shielding box of the light-shielding part 420 and a variable light-shielding area by the light-shielding film 422 of the light-shielding part 420 on the light-transmitting panel 410, and a light-transmitting area, which is the remaining area.

At this time, the processor 430 of the present disclosure can sense an external illuminance value through an illuminance sensor 440 when the light-transmitting panel 410 is in a partial light-shielding screen mode, and correct the image color corresponding to the constant light-shielding area and the variable light-shielding area based on the external illuminance value.

In other words, the processor 430 of the present disclosure can extract image color information corresponding to an external illuminance value obtained from an illuminance-specific image color information table stored in a memory 450, and correct R, G, and B colors of an image corresponding to a constant light-shielding area and a variable light-shielding area based on the extracted image color information.

In addition, the processor 430 of the present disclosure can check the current screen mode of the light-transmitting panel 410, and if the current screen mode of the light-transmitting panel 410 is a full light-shielding screen mode, control the driving part so that the light-shielding film 422 of the light-shielding part 420 moves to a target position that shields light from the entire area of the light-transmitting panel 410.

Here, the processor 430 of the present disclosure can recognize that, if the current screen mode of the light-transmitting panel 410 is a full light-shielding screen mode, only a light-shielding area including a constant light-shielding area by the light-shielding box of the light-shielding part 422 and a variable light-shielding area by the light-shielding film 422 of the light-shielding part 422 exists on the light-transmitting panel 410.

At this time, the processor 430 of the present disclosure can maintain the image color corresponding to the entire area of the transparent panel without correction if the light-transmitting panel 410 is in full light-shielding screen mode.

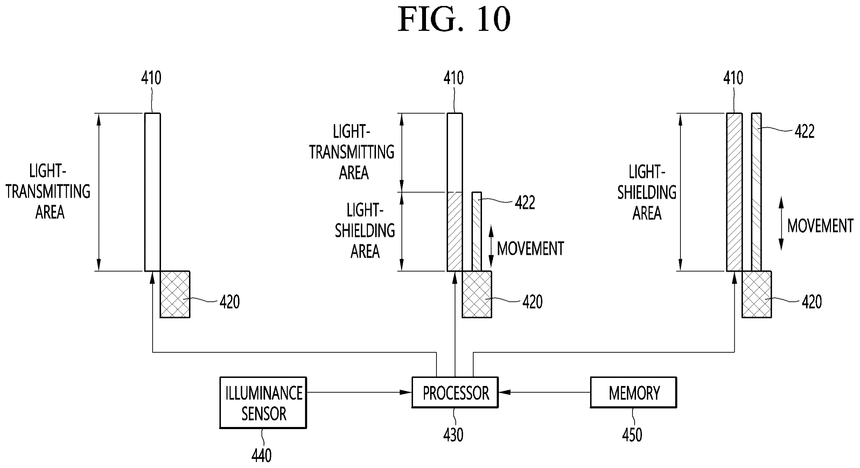

FIG. 10 is a view for explaining a process of correcting the color difference of an image of a transparent panel that does not overlap a light-shielding part.

As illustrated in FIG. 10, the processor 430 of the present disclosure, when the light-shielding part 422 is not overlapped with the light-transmitting panel 410, can recognize that only a light-transmitting area exists in the light-transmitting panel 410 if the current screen mode of the light-transmitting panel 410 is a transparent screen mode, recognize that both a light-transmitting area and a light-shielding area exist in the light-transmitting panel 410 if the current screen mode of the light-transmitting panel 410 is a partial light-shielding screen mode, and recognize that only a light-shielding area exists in the light-transmitting panel 410 if the current screen mode of the light-transmitting panel 410 is a full light-shielding screen mode.

Here, the processor 430 of the present disclosure can control the driving part so that the light-shielding film 422 of the light-shielding part 420 moves to a target position for shielding light from a partial area of the light-transmitting panel 410 when the light-transmitting panel 410 is in a partial light-shielding screen mode, and can control the driving part so that the light-shielding film 422 of the light-shielding part 420 moves to a target position for shielding light for the entire area of the light-transmitting panel 410 when the light-transmitting panel 410 is in a full light-shielding screen mode.

Accordingly, the processor 430 of the present disclosure can sense an external illuminance value through the illuminance sensor 440 and correct the image color corresponding to the light-shielding area based on the external illuminance value by recognizing that both a light-transmitting area and a light-shielding area exist in the light-transmitting panel 410 when the light-transmitting panel 410 is in a partial light-shielding screen mode.

In other words, the processor 430 of the present disclosure can extract image color information corresponding to an external illuminance value obtained from an illuminance-specific image color information table stored in a memory 450, and correct the R, G, and B colors of an image corresponding to a constant light-shielding area based on the extracted image color information.

For example, the illuminance-specific image color information table may include an illuminance-specific color gamut lookup table.

In addition, the processor 430 of the present disclosure can maintain the image color corresponding to the entire area of the transparent panel without correction because, when the light-transmitting panel 410 is in transparent screen mode or full light-shielding screen mode, neither a light-transmitting area nor a light-shielding area exists in the light-transmitting panel 410, and therefore, no color difference occurs between the light-transmitting area and the light-shielding area.

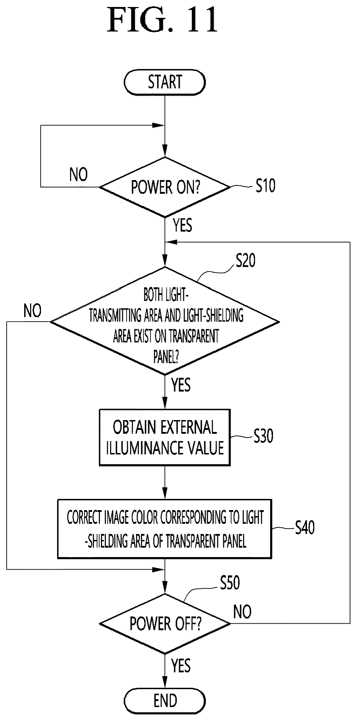

FIG. 11 is a flowchart for explaining a method for correcting color difference of a display device according to an embodiment of the present disclosure.

As illustrated in FIG. 11, the present disclosure can check whether the display device is powered on (S10).

Next, the present disclosure can check whether both a light-transmitting area and a light-shielding area exist on the transparent panel when power is applied (S20).

In one embodiment, the present disclosure can check a current screen mode of a transparent panel, and check whether both a light-transmitting area and a light-shielding area exist in the transparent panel based on the current screen mode of the transparent panel.

Here, the present disclosure can check that both a light-transmitting area and a light-shielding area exist in the transparent panel if the current screen mode of the transparent panel is a transparent screen mode or a partially light-shielding screen mode, and can check that only a light-shielding area exists in the transparent panel if the current screen mode of the transparent panel is a full light-shielding screen mode.

In some cases, the present disclosure can check that both a light-transmitting area and a light-shielding area exist in the transparent panel if the current screen mode of the transparent panel is a partial light-shielding screen mode, check that only a light-transmitting area exists in the transparent panel if the current screen mode of the transparent panel is a transparent screen mode, and check that only a light-shielding area exists in the transparent panel if the current screen mode of the transparent panel is a full light-shielding screen mode.

In another case, the present disclosure can check that both a light-transmitting area and a light-shielding area exist in the transparent panel while the light-shielding film moves to a target position for shielding light from a partial area of the transparent panel when the screen mode of the transparent panel is a transition mode from a transparent screen mode to a partial light-shielding screen mode, and check that both a light-transmitting area and a light-shielding area exist in the transparent panel while the light-shielding film moves to a target position for shielding light from an entire area of the transparent panel when the screen mode of the transparent panel is a transition mode from a transparent screen mode to a full light-shielding screen mode.

Here, the present disclosure can check that both a light-transmitting area and a light-shielding area exist in the transparent panel while the light-shielding film moves to a target position for transmitting light to the entire area of the transparent panel when the screen mode of the transparent panel is a transition mode from a full light-shielding screen mode to a transparent screen mode, and check that both a light-transmitting area and a light-shielding area exist in the transparent panel while the light-shielding film moves to a target position for shielding light from a partial area of the transparent panel when the screen mode of the transparent panel is a transition mode from a full light-shielding screen mode to a partial light-shielding screen mode.

In another embodiment, the present disclosure can check a light-shielding film position and check whether both a light-transmitting area and a light-shielding area exist in a transparent panel based on the light-shielding film position.

Here, the present disclosure, when checking the position of the light-shielding film, if the light-shielding film of the light-shielding part moves to the target position, can calculates the movement distance of the light-shielding film and check the position of the light-shielding film based on the movement distance of the light-shielding film.

For example, the present disclosure, if the movement distance of the light-shielding film is 0 or less than a maximum value, can check that both a light-transmitting area and a light-shielding area exist in a transparent panel, and can check that only a light-shielding area exists in a transparent panel if the movement distance of the light-transmitting area is equal to or greater than a maximum value.

In addition, the present disclosure, if the movement distance of the light-shielding film is 0, can recognize an area overlapping with a light-shielding box of a light-shielding part among the entire area of a transparent panel as a light-shielding area and recognize the remaining area as a light-transmitting area.

Here, the present disclosure can recognize a light-shielding area based on the pixel position information within the overlapping area stored in the memory when the movement distance of the light-shielding film is 0, in a case where pixel position information located within the overlapping area of a transparent panel overlapping with a light-shielding box is stored in the memory.

In addition, the present disclosure can check that only a light-transmitting area exists in the transparent panel when the movement distance of the light-shielding film is 0, check that both a light-transmitting area and a light-shielding area exist in the transparent panel when the movement distance of the light-shielding film is less than a maximum value, and check that only a light-shielding area exists in the transparent panel when the movement distance of the light-shielding film is equal to or greater than the maximum value.

In addition, the present disclosure can check that both a light-transmitting area and a light-shielding area exist on the transparent panel while the light-shielding film moves to a target position that shields light from a partial area of the transparent panel when the movement distance of the light-shielding film is variable from 0 to less than a maximum value, and check that both a light-transmitting area and a light-shielding area exist on the transparent panel while the light-shielding film moves to a target position that shields light from the entire area of the transparent panel when the movement distance of the light-shielding film is variable from 0 to equal to or greater than a maximum value.

In addition, the present disclosure can check that both a light-transmitting area and a light-shielding area exist on the transparent panel while the light-shielding film moves to a target position that transmits light to the entire area of the transparent panel when the movement distance of the light-shielding film is variable from a maximum value to 0, and check that both a light-transmitting area and a light-shielding area exist on the transparent panel while the light-shielding film moves to a target position that shields light from a partial area of the transparent panel when the movement distance of the light-shielding film is variable from a maximum value to less than a maximum value.

In another embodiment, the present disclosure calculates the movement time and movement position of the light-shielding film based on a sensing signal obtained from a position sensor disposed on a transparent panel if the light-shielding film moves to a target position when checking the position of the light-shielding film, and the light-shielding film position can also be checked based on the calculated movement time and movement position of the light-shielding film.

Next, the present disclosure can obtain an external illuminance value when both a light-transmitting area and a light-shielding area exist in the transparent panel (S30).

Here, the present disclosure can obtain the current external illuminance value from the illuminance sensor when it is determined that both a light-transmitting area and a light-shielding area exist in the transparent panel.

Next, the present disclosure can correct the image color corresponding to a light-shielding area based on the obtained external illuminance value (S40).

Here, the present disclosure can extract image color information corresponding to an external illuminance value obtained from an illuminance-specific image color information table stored in a memory, and correct R, G, and B colors of an image corresponding to a light-shielding area based on the extracted image color information.

For example, the illuminance-specific image color information table may include an illuminance-specific color gamut lookup table.

In addition, the present disclosure can calculate the time and position at which a light-shielding film moves, determine an image correction area corresponding to the light-shielding area based on the calculated time and position, and correct R, G, and B colors of an image corresponding to the image correction area based on extracted image color information.

Here, the present disclosure can correct the R, G, and B values of pixels corresponding to horizontal coordinates of vertical lines in an image correction area of a transparent panel according to the movement position of the light-shielding film.

At this time, the present disclosure can calculate the movement time and movement position of the light-shielding film based on a sensing signal obtained from a position sensor disposed on a transparent panel.

In addition, the present disclosure can check whether the display device is powered off (S50), and if the power is powered off, the color difference correction process can be terminated.

In this way, the present disclosure can provide a stable image to a user by improving image quality by correcting the color difference that appears between the light-shielding area and the light-transmitting area of a transparent panel based on an external illuminance value when both a light-transmitting area and a light-shielding area exist in a light-transmitting panel.

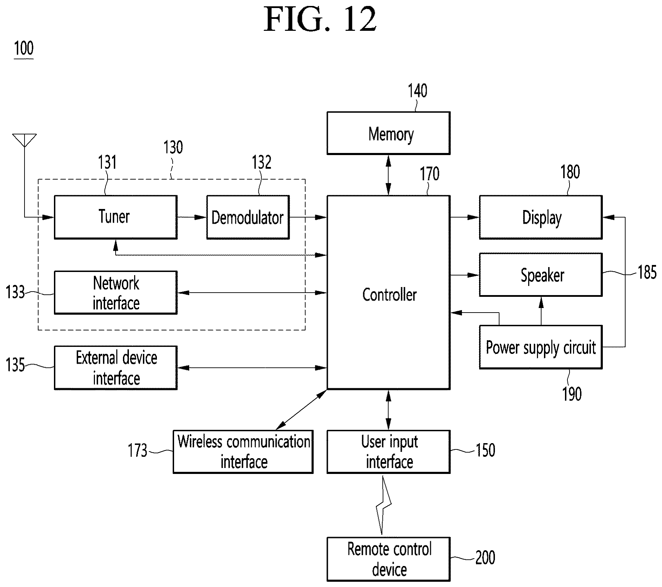

FIG. 12 is a block diagram illustrating a configuration of a display device according to an embodiment of the present disclosure.

Referring to FIG. 12, a display device 100 may include a broadcast reception module 130, an external device interface part 135, a storage part 140, a user input part 150, a control part 170, a wireless communication interface part 173, a display part 180, an audio output part 185, and a power supply part 190.

The broadcast reception module 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulation part 132 may divide the received broadcast signals into video signals, audio signals, and broadcast program-related data signals, and may restore the divided video signals, audio signals, and data signals into an output available form.

The network interface 133 may provide an interface for connecting the display device 100 to a wired/wireless network comprising internet network. The network interface 133 may transmit or receive data to or from another user or another electronic device through an accessed network or another network linked to the accessed network.

The network interface part 133 may access a predetermined webpage through an accessed network or another network linked to the accessed network. In other words, the network interface part 133 may transmit or receive data to or from a corresponding server by accessing a predetermined webpage through the network.

The network interface part 133 may receive content or data provided from a content provider or a network operator. In other words, the network interface part 133 may receive content, such as movies, advertisements, games, VODs, and broadcast signals, which are provided from the content provider or the network operator, and information relating thereto through the network.

In addition, the network interface part 133 may receive firmware update information and update files provided from the network operator, and may transmit data to the Internet or content provider or the network operator.

The network interface 133 may select and receive a desired application among applications open to the air, through network.

The external device interface part 135 may receive an application or an application list in an adjacent external device and deliver the application or the application list to the control part 170 or the storage part 140.

The external device interface part 135 may provide a connection path between the display device 100 and an external device. The external device interface part 135 may receive at least one of an image or audio outputted from an external device that is wirelessly or wiredly connected to the display device 100 and deliver the received image or the audio to the controller. The external device interface part 135 may include a plurality of external input terminals. The plurality of external input terminals may include an RGB terminal, at least one High Definition Multimedia Interface (HDMI) terminal, and a component terminal.

An image signal of an external device inputted through the external device interface part 135 may be outputted through the display part 180. A sound signal of an external device inputted through the external device interface part 135 may be outputted through the audio output part 185.

An external device connectable to the external device interface part 135 may be one of a set-top box, a Bluray player, a DVD player, a game console, a sound bar, a smartphone, a PC, a USB Memory, and a home theater system but this is just exemplary.

Additionally, some content data stored in the display device 100 may be transmitted to a user or an electronic device, which is selected from other users or other electronic devices pre-registered in the display device 100.

The storage part 140 may store signal-processed image, voice, or data signals stored by a program in order for each signal processing and control in the control part 170.

In addition, the storage part 140 may perform a function for temporarily storing image, voice, or data signals output from the external device interface part 135 or the network interface part 133, and may store information on a predetermined image through a channel memory function.

The storage part 140 may store an application or an application list input from the external device interface part 135 or the network interface part 133.

The display device 100 may play content files (e.g., video files, still image files, music files, document files, application files, etc.) stored in the storage part 140, and may provide the content files to a user.

The user input part 150 may transmit signals input by a user to the control part 170, or may transmit signals from the control part 170 to a user. For example, the user input part 150 may receive or process control signals such as power on/off, channel selection, and screen setting from the remote control device 200 or transmit control signals from the control part 170 to the remote control device 200 according to various communication methods such as Bluetooth, Ultra Wideband (WB), ZigBee, Radio Frequency (RF), and IR communication methods.

In addition, the user input part 150 may transmit, to the control part 170, control signals input from local keys (not illustrated) such as a power key, a channel key, a volume key, and a setting key.

Image signals that are image-processed by the control part 170 may be input to the display part 180 and displayed as images corresponding to the image signals. In addition, image signals that are image-processed by the control part 170 may be input to an external output device through the external device interface part 135.

Voice signals processed by the control part 170 may be output to the audio output part 185. In addition, voice signals processed by the control part 170 may be input to the external output device through the external device interface part 135.

Additionally, the control part 170 may control overall operations of the display device 100.

In addition, the control part 170 may control the display device 100 by a user command or an internal program input through the user input part 150, and may access the network to download a desired application or application list into the display device 100.

The control part 170 may output channel information selected by a user together with the processed image or voice signals through the display part 180 or the audio output part 185.

In addition, the control part 170 may output image signals or voice signals of an external device such as a camera or a camcorder, which are input through the external device interface part 135, through the display part 180 or the audio output part 185, according to an external device image playback command received through the user input part 150.

Moreover, the control part 170 may control the display part 180 to display images, and may control the display part 180 to display broadcast images input through the tuner 131, external input images input through the external device interface part 135, images input through the network interface part, or images stored in the storage part 140. In this case, an image displayed on the display part 180 may be a still image or video and also may be a 2D image or a 3D image.

Additionally, the control part 170 may play content stored in the display device 100, received broadcast content, and external input content input from the outside, and the content may be in various formats such as broadcast images, external input images, audio files, still images, accessed web screens, and document files.

Moreover, the wireless communication part 173 may perform wired or wireless communication with an external device. The wireless communication part 173 may perform short-range communication with an external device. For this, the wireless communication part 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication part 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication part 173 may detect (or recognize) a wearable device capable of communication around the display device 100. Furthermore, if the detected wearable device is a device authenticated to communicate with the display device 100, the control part 170 may transmit at least part of data processed in the display device 100 to the wearable device through the wireless communication part 173. Therefore, a user of the wearable device may use the data processed by the display device 100 through the wearable device.

The voice acquisition part 175 may acquire audio. The voice acquisition part 175 may include at least one microphone (not illustrated) and may acquire audio around the display device 100 through the microphone (not illustrated).

The display part 180 may convert image signals, data signals, or on-screen display (OSD) signals, which are processed in the control part 170, or images signals or data signals, which are received in the external device interface part 135, into R, G, and B signals to generate driving signals.

Furthermore, the display device 100 illustrated in FIG. 12 is just one embodiment of the present disclosure and thus, some of the components illustrated may be integrated, added, or omitted according to the specification of the actually implemented display device 100.

In other words, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike FIG. 12, the display device 100 may receive images through the network interface part 133 or the external device interface part 135 and play them without including the tuner 131 and the demodulation part 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to FIG. 12, an image processing device such as the separated set-top box, and a content playback device including the display part 180 and the audio output part 185.

The audio output part 185 receives the audio-processed signal from the control part 170 to output an audio signal.

The power supply part 190 supplies the corresponding power to the entire display device 100. Particularly, power may be supplied to the control part 170 that is capable of being implemented in the form of a system on chip (SOC), the display part 180 for displaying an image, the audio output part 185 for outputting audio, and the like.

Specifically, the power supply part 190 may include a converter that converts AC power to DC power and a DC/DC converter that converts a level of the DC power.

The above-described present disclosure can be implemented as a computer-readable code on a medium in which a program is recorded. The computer-readable medium includes all kinds of recording devices in which data that can be read by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device, and the like. In addition, the computer may include a processor (180) of an artificial intelligence device.

### [Industrial Applicability]

According to the display device according to the present disclosure, if both a light-transmitting area and a light-shielding area exist in the light-transmitting panel, the color difference appearing between the light-shielding area and the light-transmitting area of the transparent panel can be corrected based on the external illuminance value, thereby improving the image quality, so the industrial applicability is remarkable.

## Claims

1. A display device comprising:
a transparent panel;
a light-shielding part forming a light-shielding area on the transparent panel; and
a processor correcting an image color of the light-shielding area, wherein the processor checks whether both a light-transmitting area and a light-shielding area exist on the transparent panel, obtains an external illuminance value if both the light-transmitting area and the light-shielding area exist, and corrects an image color corresponding to the light-shielding area based on the obtained external illuminance value.

2. The display device of claim 1,
wherein the light-shielding part includes:
a light-shielding film shielding light from the rear surface of the transparent panel;
a driving part moving the light-shielding film to a target position; and,
a light-shielding box covering the light-shielding film and the driving part.

3. The display device of claim 2,
wherein the light-shielding film moves along the rear surface of the transparent panel to form a variable light-shielding area on the transparent panel, and
wherein the light-shielding box is fixedly arranged to overlap a part of the transparent panel, and forms a constant light-shielding area on the transparent panel.

4. The display device of claim 3,
wherein the processor,
if the transparent panel is in a transparent screen mode, corrects the image color corresponding to the constant light-shielding area based on the external illuminance value, and
if the transparent panel is in a partial light-shielding screen mode, controls the driving part to move the light-shielding film to a target position that shields light from a partial area of the transparent panel, thereby forming a variable light-shielding area in the transparent panel, and corrects the image color corresponding to the constant light-shielding area and the variable light-shielding area based on the external illuminance value.

5. The display device of claim 1,
Wherein the processor,
when checking whether both the light-transmitting area and the light-shielding area exist in the transparent panel, checks the current screen mode of the transparent panel, and checks whether both the light-transmitting area and the light-shielding area exist in the transparent panel based on the current screen mode of the transparent panel.

6. The display device of claim 5,
Wherein the processor,
if the current screen mode of the transparent panel is a transparent screen mode or a partially light-shielding screen mode, checks that both the light-transmitting area and the light-shielding area exist in the transparent panel, and
if the current screen mode of the transparent panel is a full light-shielding screen mode, checks that only the light-shielding area exists in the transparent panel.

7. The display device of claim 6,
wherein the processor,
if the transparent panel is in a partial light-shielding screen mode, controls the driving part so that the light-shielding film of the light-shielding part moves to a target position that shields light from a partial area of the transparent panel, and
if the transparent panel is in a full light-shielding screen mode, controls the driving part so that the light-shielding film of the light-shielding part moves to a target position that shields light from an entire area of the transparent panel.

8. The display device of claim 1,
wherein the processor,
when checking whether both the light-transmitting area and the light-shielding area exist in the transparent panel, checks the position of the light-shielding film of the light-shielding part, and based on the position of the light-shielding film, checks whether both the light-transmitting area and the light-shielding area exist in the transparent panel.

9. The display device of claim 8,
wherein the processor,
when checking the position of the light-shielding film of the light-shielding part, if the light-shielding film of the light-shielding part moves to the target position, calculates the movement distance of the light-shielding film, and checks the position of the light-shielding film based on the movement distance of the light-shielding film.

10. The display device of claim 1, further comprising:
an illuminance sensor sensing external illuminance,
wherein the processor, when obtaining the external illuminance value, obtains the current external illuminance value from the illuminance sensor if determining that both a light-transmitting area and a light-shielding area exist in the transparent panel.

11. The display device of claim 1, further comprising:
a memory storing an illuminance-specific image color information table, wherein the processor, when correcting the image color corresponding to the light-shielding area, extracts image color information corresponding to the obtained external illuminance value from the illuminance-specific image color information table pre-stored in the memory, and corrects the R, G, and B colors of the image corresponding to the light-shielding area based on the extracted image color information.

12. The display device of claim 11,
wherein the processor,
when correcting the image color corresponding to the light-shielding area, calculates the time and position at which the light-shielding film of the light-shielding part moves, determines the image correction area corresponding to the light-shielding area based on the calculated time and position, and corrects the R, G, and B colors of the image corresponding to the image correction area based on the extracted image color information.

13. The display device of claim 12,
wherein the processor corrects the R, G, B values of pixels corresponding to the horizontal coordinates of the vertical line in the image correction area of the transparent panel according to the movement position of the light-shielding film.

14. The display device of claim 12,
wherein the processor calculates the movement time and movement position of the light-shielding film based on a sensing signal obtained from a position sensor disposed on the transparent panel.

15. A method for correcting color difference of a display device including a light-shielding film for shielding light from a transparent panel, comprising:
checking whether both a light-transmitting area and a light-shielding area exist in the transparent panel;
obtaining an external illuminance value if both a light-transmitting area and a light-shielding area exist in the transparent panel; and
correcting the image color corresponding to the light-shielding area based on the obtained external illuminance value.
